(19) Europäisches Patentamt
European Patent Office
Office européen des brevets

(11) Veröffentlichungsnummer : **0 446 748 B1**

(12) # EUROPÄISCHE PATENTSCHRIFT

(45) Veröffentlichungstag der Patentschrift : **21.06.95 Patentblatt 95/25**

(51) Int. Cl.$^6$ : **G03G 9/09**, C09D 11/00, C09B 5/00

(21) Anmeldenummer : **91103209.2**

(22) Anmeldetag : **04.03.91**

(54) **Verwendung von Perylenfarbstoffen zur Herstellung von Schreib-, Druck- und Kopiererzeugnissen.**

(30) Priorität : **10.03.90 DE 4007618**

(43) Veröffentlichungstag der Anmeldung : **18.09.91 Patentblatt 91/38**

(45) Bekanntmachung des Hinweises auf die Patenterteilung : **21.06.95 Patentblatt 95/25**

(84) Benannte Vertragsstaaten : **CH DE GB LI NL**

(56) Entgegenhaltungen :
**EP-A- 0 006 122**
**EP-A- 0 230 950**
**EP-A- 0 321 919**
**WO-A-91/02032**
**DE-A- 3 703 495**
**FR-A- 2 379 841**
**CANADIAN JOURNAL OF CHEMISTRY. vol. 63, 1985, OTTAWA CA Seiten 134 - 139; Z. D.POPOVIC ET AL.: "Photoconductivity studies of perylene tetracarboxyl-diimides."**

(73) Patentinhaber : **RIEDEL-DE HAEN AKTIENGESELLSCHAFT**
**Wunstorfer Strasse 40**
**D-30926 Seelze (DE)**

(72) Erfinder : **Langhals, Heinz, Prof. Dr.**
**Kleiststrasse 16**
**W-8012 Ottobrunn (DE)**
Erfinder : **Demmig, Stefan, Dr.**
**Lagerhausstrasse 18**
**W-8933 Obermeitingen (DE)**

(74) Vertreter : **Muley, Ralf, Dr. et al**
**Cassella AG,**
**Patentabteilung,**
**Hanauer Landstrasse 526**
**D-60386 Frankfurt (DE)**

EP 0 446 748 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Verwendung von Perylenfarbstoffen zur Herstellung dokumentenechter Schreib-, Druck- und Kopiererzeugnisse.

Die Elektrophotographie wird heute in breitem Umfang für Vervielfältigungen und für die Herstellung von Druckerzeugnissen eingesetzt - als Beispiel seien Laserdrucker und Trockenkopiersysteme genannt. Insbesondere beim Einsatz von Laserdruckern als Peripherie für Computer wäre es wünschenswert, dokumentenechte Ausdrucke auf Papier zu erreichen, die den Einsatzbereich der Laserdrucker noch erheblich erweitern würde. Die heute üblicherweise verwendeten Toner haben aber demgegenüber den Nachteil, daß der Druck von der Papieroberfläche durch Abheben mehr oder weniger leicht wieder entfernt werden kann, so daß sie nicht für Dokumente verwendet werden können. Ein Toner oder ein Zusatz zum Toner ist wünschenswert, der beim Fixiervorgang in das Papier einzieht und nur sehr schwer wieder entfernt werden kann. Hierfür geeignete Substanzen sollten nicht nur gut sichtbar und sehr lichtecht sein, sondern auch gegen die üblichen Bleichmittel wie Hypochlorit beständig sein, damit sie mit "Tintenkillern" nicht entfernt werden können. Weiterhin sollten sie gegen stark reduzierende Lösungen wie alkalische Dithionitlösung und auch gegen wäßrige salpetrige Säure beständig sein. Schließlich wäre wichtig, Spuren der Substanzen empfindlich nachweisen zu können, um auch teilweise mechanisch entfernte und dann überdeckte Schriften sicher zu rekonstruieren.

Perylenfarbstoffe sind bereits aus einer Vielzahl von Veröffentlichungen bekannt (siehe z.B. Chem. Ber. 115 2927 (1982) und Chem. Ber. 118 4641 (1985). Es ist auch bereits bekannt, unschmelzbare Perylenfarbstoffe als Pigmente in Druckfarben und auch als Zusätze in Tonern (Chem. Abstr. 109 201595r) zu verwenden. Die besonderen Vorzüge der Farbstoffe sind dabei große thermische Stabilität und Lichtechtheit. Erst, bei Temperaturen von 400 bis 500°C erfolgt dann ein thermischer Abbau. Schmelzbare Perylenfarbstoffe eignen sich als Pigmente weniger, vielmehr eröffnen sich diesen völlig andere und neue Anwendungen.

Perylenfarbstoffe mit aromatischen Substituenten $R^1$ und $R^2$ sind verhältnismäßig gut untersucht. Es gelang in dieser Reihe aber nicht, Farbstoffe mit niedrigen Schmelzpunkten herzustellen. Um so erstaunlicher war die Beobachtung, daß Farbstoffe mit rein aliphatischen Resten $R^1$ und $R^2$ verhältnismäßig niedrige Schmelzpunkte besitzen - siehe Tab. 1. Durch lange Alkylketten konnte der Schmelzpunkt von $R^1$=$R^2$=Propyl mit über 350°C bis auf 312,5°C für $R^1$ = $R^2$=Hexadecyl gesenkt werden. Damit stehen zwar prinzipiell schmelzbare Farbstoffe zur Verfügung, die erreichbaren Schmelzpunkte

Tab.1: Schmelzpunkte und Schmelzenthalpien von Perylenfarbstoffen (1) bestimmt mit Hilfe der Differentieralthermoanalyse

| Reste R in 1 | Mol.Gew. g/mol | Schmp. °C | Schmelzenthalpie J/g | J/mol | kcal/mol |
|---|---|---|---|---|---|
| Propyl | 474.5 | > 350 | | | |
| Butyl | 502.6 | > 350 | | | |
| Pentyl | 530.6 | > 350 | | | |
| Hexyl | 558.7 | > 360 | | | |
| Nonyl | 642.8 | (343.5)a) | | | |
| Dodecyl | 727.0 | > 360 | | | |
| Tetradecyl | 783.1 | (327.5)a) | | | |
| Hexadecyl | 839.2 | (312.5)a) | | | |
| Octadecyl | 895.2 | > 360 | | | |
| 1-Methylethyl | 474.5 | > 360 | | | |
| 1-Ethylpropyl | 530.6 | > 360 | | | |
| 1-Propylbutyl | 586.7 | 360.5 | 33.3 | 19.5 | 4.7 |
| 1-Butylpentyl | 642.8 | 272.1 | 32.0 | 20.6 | 4.9 |
| 1-Pentylhexyl | 698.9 | 199.8 | 34.6 | 24.2 | 5.8 |
| 1-Hexylheptyl | 755.1 | 160.4 | 28.0 | 21.1 | 5.1 |
| 1-Heptyloctyl | 811.2 | 130.3 | 23.5 | 19.1 | 4.6 |
| 1-Octylnonyl | 867.3 | 106.7 | 10.7 | 9.3 | 2.2 |
| 1-Nonyldecyl | 922.7 | 101.4 | 9.7 | 9.0 | 2.1 |
| 1-Decylundecyl | 978.8 | 93.6 | 6.9 | 6.8 | 1.6 |
| 1-Dodecyltridecyl | 1090.9 | 75.4 | 95.8 | 104.5 | 24.9 |
| 1-Hexadecylheptadecyl | 1316.1 | 82.6 | 55.5 | 73.0 | 17.4 |
| 1-Octadecylnonadecyl | 1428.3 | 84.6 | 62.2 | 88.8 | 21.2 |
| 1-Ethylbutyl | 586.7 | > 360 | | | |
| 1-Ethylpentyl | 642.8 | (269.5)a) | | | |
| 1-Ethylhexyl | 698.9 | (249.5)a) | | | |

a) mit einem Schmelzpunktsbloch gemessen

sind aber noch verhältnismäßig hoch. Eine noch weitere Verlängerung der Ketten könnte zwar evt. den Schmelzpunkt senken, der relative Anteil des Chromphors am Gesamtmolekül würde aber dadurch absinken - der Farbstoff besteht dann im wesentlichen nur noch aus Paraffin. Erstaunlicherweise sinkt der Schmelzpunkt ganz erheblich ab, wenn statt eines primären Restes ein sekundärer, verzweigter Rest verwendet wird.

Der Effekt ist so dramatisch, daß die Farbstoffe mit $R^1 = R^2$ = 1-Methylethyl und 1-Ethylpropyl noch nicht unterhalb von 360°C schmelzen. Verlängert man aber die Ketten, dann sinkt der Schmelzpunkt von $R^1 = R^2$ = 1-Hexylheptyl mit 160,4°C bis auf 75,4°C bei $R^1 = R^2$ = 1-Dodecyltridecyl ab. Es ist andererseits aus Tab.1 auch zu ersehen, daß man den Schmelzpunkt durch die Kettenlänge der Alkylseitenkette auf das jeweilige Problem abstimmen kann. So würde man für Toner, die eine optimale Temperatur von 160°C benötigen, den Farbstoff mit $R^1 = R^2$ = 1-Hexylheptyl einsetzen. Wünscht man dagegen einen Farbstoff, der bereits in siedendem Wasser schmilzt, so sollte man Farbstoffe mit einer Kettenlänge 1-Decylundecyl und aufwärts einsetzen. Die optischen Eigenschaften der Farbstoffe, wenn sie auf Papier aufgezogen werden, sind nahezu unabhängig von der Kettenlänge - es entstehen klare, leuchtend rote und sehr auffällige Färbungen, die eine rote Eigenfluoreszenz besitzen.

Die vorliegende Erfindung betrifft die Verwendung von schmelzbaren Farbstoffen der allgemeinen Formel I

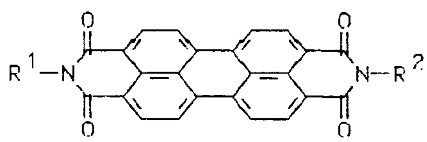

( I )

worin $R^1$ und $R^2$ unabhängig voneinander Nonyl, Tetradecyl, Hexadecyl, 1-Propylbutyl, 1-Butylpentyl, 1-Pentylhexyl, 1-Hexylheptyl, 1-Heptyloctyl, 1-Octylnonyl, 1-Nonyldecyl, 1-Decylundecyl, 1-Dodecyltridecyl, 1-Hexadecylheptadecyl, 1-Octadecylnonadecyl, 1-Ethylpentyl oder 1-Ethylhexyl bedeuten, in geschmolzener Form zur Herstellung von dokumentenechten Druck- und Kopiererzeugnissen, wobei $R^1$ und $R^2$ nicht gleichzeitig 1-Propylbutyl, 1-Butylpentyl, 1-Pentylhexyl oder 1-Hexylheptyl bedeuten können.

Unter die erfindungsgemäße Verwendung dieser Art fällt insbesondere die Verwendung als Toner oder als Zusatz zu Tonern in der Elektrophotographie, bevorzugt für Laserdrucker und Xeroxkopierer.

Die geschmolzenen Farbstoffe ziehen sehr fest auf das Papier auf und die Schmelzen werden regelrecht vom Papier aufgesogen. Dies gilt sowohl für die reinen Farbstoffe, als auch für Mischungen mit Polymeren.

In einer weiteren erfindungsgemäßen Ausführungsform werden die Farbstoffe der allgemeinen Formel I in Lösung, bevorzugt in organischen Lösungsmitteln, oder in Malkreiden oder Markierungsstiften verwendet und zu einer nachträglichen dauerhaften Fixierung einer Hitzebehandlung bei Temperaturen je nach Farbstoff zwischen 50 und 400°C, bevorzugt 80 bis 360°C, unterworfen. Besonders bevorzugt zu diesem Zweck ist siedendes Wasser.

Anspruchsgemäße Farbstoffe der allgemeinen Formel I, die beim Schmelzen einer Farbänderung unterliegen, können zum irreversiblen Temperaturnachweis verwendet werden. Die Farbstoffe können dabei als Reinsubstanz oder in Form eines Gemischs mit einem Träger, der die geschmolzenen Farbstoffe aufsaugt, eingesetzt werden. Geeignete Träger sind beispielsweise Kieselgel oder Aluminiumoxid.

Ist der Farbstoff einmal auf Papier aufgebracht, dann ist er sehr schwer wieder von diesem zu entfernen, zumindest ist es nicht gelungen, den Farbstoff ohne sichtbare Veränderung des Papiers wieder zu entfernen. Die Färbung ist völlig stabil gegen konzentrierte Natriumhypochloritlösung, die als typisches Bleichmittel zum Entfärben von Tinte, Methylenblau oder Kristallviolett (Farbbänder in Schreibmaschinen und Druckern, Kopierstifte, Tinten von Kugelschreibern, Stempelfarbe) verwendet wird. Eine Beseitigung der Färbung mit "Tintenkillern" ist daher nicht möglich. Andere typische Entfärbeverfahren benutzen alkalische Dithionitlösungen oder saure Nitritlösungen. Die auf Papier aufgezogenen Farbstoffe sind gegen diese Entfärbemittel völlig stabil - eher wird das Papier als der Farbstoff beschädigt. Trotz ihrer guten Löslichkeit in organischen Lösungsmitteln sind die Farbstoffe von der Papieroberfläche auch mit großen Lösungsmittelmengen nicht mehr vollständig zu entfernen. Schließlich muß noch die ausgezeichnete Lichtechtheit und Temperaturstabilität und Beständigkeit der Perylenfarbstoffe gegen ionisierende Strahlen erwähnt werden, die die Langzeitstabilität der Färbungen garantiert, ebenso, wie die allgemein hervorragende chemische Beständigkeit der Farbstoffe gegen die üblichen, aggressiven Reagenzien wie z.B. Säuren, Laugen oder Oxydationsmittel.

Zuletzt bestünde zum Entfernen einer Schrift noch die Möglichkeit, das Papier sehr weitgehend einschließlich des Farbstoffs abzutragen und durch neue Fasern zu ersetzen. Für diesen Fall bietet die Fluoreszenz der Färbung eine zusätzliche Sicherheit, denn die Farbstoffe können dadurch sogar noch in Spuren erkannt und nachgewiesen werden. Wegen der ungewöhnlich großen Lichtechtheit der Farbstoffe kann hierfür bei der optischen Anregung auch eine sehr intensive UV-Lichtquelle verwendet werden (z.B. eine starke Quecksilberdampflampe), mit der dann aufgrund der hohen Nachweisempfindlichkeit auch ausgesprochen sorgfältig entfernte Schriftzüge wieder sichtbar gemacht werden können.

Die Perylenfarbstoffe können für eine Sicherheitsmarkierung entweder direkt oder gelöst auf die Oberfläche des Papiers aufgebracht und durch Erhitzen und Schmelzen von diesem aufgesogen werden oder geschmolzen auf das Papier gebracht werden. Es entstehen dann leuchtend rote Färbungen. Werden dunkle oder sonst andersfarbige Sicherheitsmarkierungen benötigt, so können die Perylenfarbstoffe mit z.B. schwarzen Tonern gemischt verwendet werden. Die schwarzen Färbungen lassen sich dann zwar mit den üblichen Methoden entfernen, es bleibt aber die rote Färbung des betreffenden Perylenfarbstoffs bestehen, für die das oben Gesagte gilt.

Als zu färbendes Substrat wurde bisher Papier erwähnt, weil das der häufigsten und wichtigsten Anwendung der Farbstoffe entspricht, es können aber auch beliebige andere poröse Materialien verwendet werden. Beispiele sind anorganische Materialien wie unglasierter Ton, Steinzeug, organische Materialien wie Holz, Stroh, Bast, Felle, Materialien für Textilien wie Baumwolle, Wolle und Seide, Jute, Materialien wie Leder und Ledererersatzstoffe, schließlich polymere Materialien wie Schaumstoffe. Die Farbstoffe können sogar für glatte Materialien z.B. aus Polyvinylchlorid, Celluloseacetat, Polycarbonat, Polyamid, Polyimiden, Polybenzimidazolen, Melaminharzen, Silikonen, Polystyrol oder Polymethylmethacrylat verwendet werden. In diesen Fällen wird die starke Lipophilie und gute Löslichkeit der Farbstoffe in organischen Medien ausgenutzt - der auf die Oberfläche des glatten Materials aufgebrachte Farbstoff löst sich bei erhöhter Temperatur in diesem und wandert durch Diffusion homogen gelöst auch in etwas tiefer gelegene Schichten. Er kann dann ohne Beschädigung des Materials nicht wieder entfernt werden und ist neben seiner Farbe insbesondere durch die starke, dann orangefarbene Fluoreszenz sehr auffällig. Ein dokumentenechter Aufdruck z.B. kann bei den genannten Materialien als Schutz gegen Produktpiraterie verwendet werden.

Die genannten Perylenfarbstoffe fluoreszieren auf den Substraten stark rot.
Die Perylenfarbstoffe werden in an und für sich bekannter Weise aus den betreffenden primären Aminen und dem Perylen-3,4:9,10-tetracarbonsäurebisanhydrid durch Kondensation synthetisiert. Die Amine werden bereits zum Teil technich synthetisiert. Für die Darstellung der langkettigen Amine am sekundären Kohlenstoff werden, soweit sie selbst oder deren Vorstufen nicht verfügbar sind, aus den entsprechenden Nitrilen (R-CN) und einem Grignardreagenz (RMgCl, RMgBr oder RMgI) die betreffenden Ketone (R-CO-R) dargestellt. Diese werden nach bekannten Verfahren mit Hydroxylamin bzw. dessen Hydrochlorid in die Oxime (R-CNOH-R) übergeführt, die dann zu den Aminen reduziert werden. Als Reduktionsmittel können z.B. komplexe Hydride wie Lithiumaluminiumhydrid verwendet werden. Besonders bewährt hat sich für die Reduktion Natriumdihydrobis(2-methoxyethoxy)aluminiumat(1-), das sehr reine Amine liefert und unproblematisch zu handhaben ist. Die Perylenfarbstoffe selbst können nach an und für sich bekannten Methoden durch Umkristallisation, extraktive Umkristallisation, Tieftemperaturkristallisation oder Chromatographie z.B. an Kieselgel oder Aluminiumoxid bevorzugt mit Laufmitteln geringer Polarität, wie Chloroform, Petrolether (30/50) oder n-Pentan oder mit Mischungen der Lösungsmittel gereinigt werden. Wird nur die Absorption für die Sicherheitsmarkierung verwendet, so ist keine besondere Reinigung der Farbstoffe erforderlich. Wird dagegen auf eine starke Feststofffluoreszenz der Farbstoffe besonderer Wert gelegt, so sollten diese weiter aufgereinigt werden.

**EXPERIMENTIELLER TEIL**

Die Perylenfarbstoffe werden aus technischem Perylen-3,4:9,10-tetracarbonsäurebisanhydrid (2,55 mmol), dem entsprechenden primären Amin oder dem Aminhydrochlorid (6 mmol) und Imidazol (5 g) dargestellt und werden entsprechend der Literatur gereinigt (siehe z.B. Chem. Ber. 118 4641 (1985) und Chem. Ber. 121 225 (1988)). Die Angaben beziehen sich auf die Darstellung von hochreinen Farbstoffen. Die Löslichkeiten der Farbstoffe sind nach einer Woche der Lösung mit dem festen Farbstoff bei gelegentlichem Umschütteln bestimmt worden.

**N,N′-Di(n-nonyl)perylen-3,4:9,10-bis(dicarboximid)**

1.72 g (12.0 mmol) 1-Nonylamin, Reaktionszeit 1 h, Reinigung durch exktraktive Umkristallisation aus Toluol und Cyclopentanon. Ausb. 2.13 g (65%), dunkelbraune Nadeln - Schmp. 343-344°C, $R_f$ (Kieselgel/$CHCl_3$) = 0,45. IR (KBr) : $\nu$ = 2953 $cm^{-1}$ w, 2929m, 2854w, 1696s, 1658s, 1616w, 1594s, 1578m, 1506w. 1467w, 1456w, 1440w, 1405w, 1380w, 1343m, 1298w, 1276w, 1254w, 1091w, 853w, 846w, 810m, 794w, 747m, 725w, 630w, 591w. - UV ($CHCl_3$): $\lambda$ ($\varepsilon$) = 457.5 nm (19030), 488,5 (51430), 525 (85370). - Fluoreszenz ($CHCl_3$): $\lambda_{max.}$ = 532 nm, 573. - MS (70 eV) : m/z (%) = 644 (10), 643 (46), 642 (100) ($M^+$), 625 (9), 530 (5), 529 (8), 518 (6), 517 (18), 516 (7), 405 (8), 404 (18), 392 (7), 391 (18), 390 (25), 373 (5), 55 (5), 44 (33), 41 (6), - Löslichkeit ($CHCl_3$/20°C): 11 mg/100 ml.

| | | | | |
|---|---|---|---|---|
| $C_{42}H_{46}N_2O_4$ (642.8) | Ber. | C 78.47 | H 7.21 | N 4.36 |
| | Gef. | C 78.58 | H 7.34 | N 4.13 |

**N,N'-Di(n-tetradecyl)perylen-3,4:9,10-bis(dicarboximid)**

2.56 g (12.0 mmol) 1-Tetradecylamin, Reaktionszeit 1 h, Reinigung durch extraktive Umkristallisation aus Toluol und Cyclopentanon. Ausb. 2.04 (51%), schwarze Nadeln - Schmp. 327-338°C, $R_f$ (Kieselgel/$CHCl_3$) = 0,57. - IR (KBr): $\nu$ = 2954 $cm^{-1}$ m, 2924s, 2851m, 1697s, 1658s, 1615w. 1594s, 1580m, 1510w, 1467m, 1440m, 1405m, 1379m, 1344, 1302w, 1282w, 1261m, 1249m, 1186w, 1160w, 1132w, 1091m, 1015w, 1008w, 987w, 975w, 857w, 848w, 809s, 796w, 747s, 728w, 634w, 594w. - UV ($CHCl_3$): $\lambda_{max}$ ($\varepsilon$) = 458 nm (19070), 488,5 (51300), 525 (85120). - Fluoreszenz ($CHCl_3$): $\lambda_{max}$ = 533 nm, 573. - MS (70 eV): m/z (%) = 785 (16), 784 (54), 783 (100) ($M^+$), 766 (13), 755 (8), 588 (9), 587 (20), 586 (7), 418 (5), 417 (5), 405 (12), 404 (17), 403 (5), 392 (8), 391 (19), 390 (23), 373 (5), 57 (5), 55 (5), 44 (8), 43 (7), 41 (5). - Löslichkeit ($CHCl_3$): 5.4 mg/100 ml.

| | | | | |
|---|---|---|---|---|
| $C_{52}H_{66}N_2O_4$ (783.1) | Ber. | C 79.76 | H 8.49 | N 3.58 |
| | Gef. | C 80.01 | H 8.52 | N 3.47 |

**N,N'-Di(n-hexadecyl)perylen-3,4:9,10-bis(dicarboximid)**

2,90 g (12,0 mmol) 1-Hexadecylamin, Reaktionszeit 1 h, Reinigung durch extraktive Umkristallisation aus Toluol und Cyclopentanon. Ausb. 2,13 g ( 50%), schwarze Nadeln - Schmp. 312-313°C, $R_f$ (Kieselgel/$CHCl_3$) = 0.62. IR (KBr): $\nu$ = 2958 $cm^{-1}$m, 2924s, 2850w, 1697s, 1658s, 1612w, 1594s, 1580m, 1507w, 1467m, 1457w, 1442m, 1405m, 1379m, 1344m, 1302w, 1286w, 1267w, 1253m, 1245w, 1189w, 1160w, 1132w, 1091m, 1018, 987w, 856w, 848w, 809s, 796w, 747w, 728w, 634w, 595w. - UV ($CHCl_3$): $\lambda_{max}$ ($\varepsilon$) = 457,5 nm (18340), 488 (49770), 524,5 (82470). - Fluoreszenz ($CHCl_3$): $\lambda_{max}$ = 533 nm, 573. - MS (70 eV): m/z (%) = 841 (19), 640 (61), 839 (100) ($M^+$), 822 (6), 616 (9), 615 (20), 614 (6), 418 (5), 417 (6), 405 (14), 404 (16), 403 (5), 392 (7), 391 (19), 390 (21), 83 (5), 69 (6), 57 (10), 55 (9), 44 (8), 43 (12), 41 (9). - Löslichkeit ($CHCl_3$): 6.0 mg/100 ml.

| | | | | |
|---|---|---|---|---|
| $C_{56}H_{74}N_2O_4$ (839.2) | Ber. | C 80.15 | H 8.89 | N 3.34 |
| | Gef. | C 80.35 | H 8.93 | N 3.24 |

**N,N'-Di(1-heptyloctyl)perylen-3,4:9,10-bis(dicarboximid)**

2,73 g (12,0 mmol) 8-Pentadecylamin, 10 g Imidazol, Reaktionzeit 2 h, Reinigung durch Säulenchromatographie mit Petrolether 30/50 und Kieselgel und Tieftemperaturkristallisation aus n-Pentan bei -30°C. Ausb. 2,70 g (66%), orange Rosetten (Hochtemperaturmodifikation als rotes Pulver) - Schmp. 129°C, Kristallumwandlung 50-60°C, $R_f$ (Kieselgel/$CHCl_3$) = 0,85. - IR (KBr): $\nu$ = 2955 $cm^{-1}$s, 2925s, 2925s, 2855s, 1699s, 1660s, 1594s, 1579m, 1508w, 1483w, 1467m, 1458m, 1435m, 1406s, 1378w, 1352m, 1338s, 1255m, 1209w, 1174m, 1125w, 1108w, 964w, 865w, 856w, 8511m, 825w, 809m, 796w, 747m, 724w. - UV ($CHCl_3$): $\lambda_{max}$ ($\varepsilon$) ) 458 nm (18670), 489 (51460), 525.5 (86040); (n-Heptan) : $\lambda_{max}$($\varepsilon$) = 448.5 nm (20940), 479 (55230), 514.4 (93540). - Fluoreszenz ($CHCl_3$): $\lambda_{max}$ = 534 n, 576; (n-Heptan): $\lambda_{max}$ 518 nm, 558. Feststoff-Fluoreszenz (orange Modifikation): $\lambda_{max}$ = 587 nm, 625. - Feststoff Fluoreszenz (rote Modifikation): $\lambda_{max}$ = 642 nm. - $^1$H-NMR ($CDCl_3$/TMS): $\delta$ = 0,83 (m, 12 H), 1,25 (m, 40 H), 2,00 (m, 8 H), 5.18 (m, 2 H), 8.50 (m, 8 H). - $^{13}$C-NMR ($CDCl_3$): $\delta$ = 14.00, 22.57, 26.99, 29.20, 29.51, 31.78, 32.38, 54.77, 122.80, 123.52, 126.25, 129.43, 131.25, 134.25, 163.84. - MS (70 eV): m/z (%) ) 8112 (18), 811 (58), 810 (100) ($M^+$), 794 (5), 793 (8), 602 (16), 601 (40), 600 (41), 403 (5), 393 (5), 392 (21), 391 (57), 390 (75), 373 (8). - Löslichkeit (n-Heptan/20°C): 0.59 g/100ml.

| | | | | |
|---|---|---|---|---|
| $C_{54}H_{70}N_2O_4$ (811.2) | Ber. | C 79.96 | H 8.70 | N 3.45 |
| orange Modifikation | Gef. | c 80.32 | H 8.63 | N 3.38 |

**N,N'-Di(1-octylnonyl)perylen-3,4:9,10-bis(dicarboximid)**

3.80 g (12.0 mmol) 9-Heptadecylamin, Reaktionszeit 2 h, Reinigung durch Säulenchromatographie mit

Chloroform und Kieselgel, eine zweite Chromatographie mit Petrolether und Kieselgel und eine Tieftemperaturkristallisation aus n-Pentan bei -30°C. Ausb. 2.9 g (66%), rotbraune Rhomben - Schmp. 102-103°C, Kristallumwandlung einige Grad unterhalb des Schmelzpunkts, $R_f$ (Kieselgel/$CHCl_3$) = 0,82. - IR (KBr): ν = 2955 $cm^{-1}$s, 2926s, 2854s, 1697s, 1651s, 1579m, 1507w, 1584w, 1467m, 1457m, 1435m, 1406s, 1377w, 1353m, 1339s, 1253m, 1210w, 1172m, 1125w, 1109w, 967w, 860w, 850w, 810m, 795m, 747m, 723w. - UV ($CHCl_3$): $\lambda_{max}$ (ε) = 458 nm (18710), 489.5 (51550), 526 (85650); (n-Heptan): $\lambda_{max}$ (ε) = 448.5 nm (20190), 479 (53950), 515 (91770). -Fluoreszenz ($CHCl_3$): $\lambda_{max}$ = 534 nm, 576; (n-Heptan): $\lambda_{max}$ = 523.5 nm, 558. Feststoff-Fluoreszenz (orange Modifikation): $\lambda_{max}$ = 585 nm, 595 sh, 625 sh. -Feststoff Fluoreszenz (rote Modifikation): $\lambda_{max}$ = 608 nm. - $^1$H-NMR ($CDCl_3$/TMS): δ = 0.95 (m, 12 H), 1,23 (m, 48 H), 2,00 (m, 8 H), 5.10 (m, 2 H), 8,48 (m, 8 H). - C-NMR ($CDCl_3$): δ = 14.03, 22.06, 26.99, 29.23, 29.51, 31.81, 32.38, 54.77, 122.80, 123.52, 1126.28, 129.46, 131.31, 134.28, 164.11. - MS (70 eV): m/z (%) = 869 (8), 868 (27), 867 (42) ($M^+$), 854 (9), 853 (15), 850 (5), 812 (8), 811 (14), 630 (14), 629 (33), 628 (29), 615 (6), 614 (5), 601 (10), 600 (9), 403 (6), 393 (7), 392 (29), 391 (81), 390 (100), 373 (9), 238 (5), 111 (8), 98 (15), 97 (17), 85 (6), 84 (10), 83 (22), 81 (5), 71 (11), 70 (14), 69 (24), 67 (8), 57 (19), 56 (13), 55 (32), 54 (6), 44 (8), 43 (24), 42 (6), 41 (22), 39 (6). - Löslichkeit (n-Heptan/20°C): 0.30 g/100 ml.

| | | | | |
|---|---|---|---|---|
| $C_{58}H_{78}N_2O_4$) (867.3) | Ber. | C 80.33 | H 9.06 | N 3.23 |
| orange Modifikation | Gef. | C 80.79 | H 9.04 | N 3.34. |

Röntgenstrukturanalyse von 7 Tieftemperaturmodifikation:

$C_{58}H_{78}N_2O_4$, $M_r$ = 867.28, a = 1760.9 (6), b-1929.1(7), c=1404.2(4) pm, α = 104.04(3)°, β = 113.12 (3)°, δ = 100.67 (3)°, V = 4039(2)·$10^{-6}$ $pm^{-3}$, Z = 3, $d_{ber}$ = 1.070 g·$cm^{-3}$, Kristallsystem Triklin, Raumgruppe P1 - Datensammlung: Diffractometer Nicolet R3m/V, Strahlung Mo $K_\alpha$, Monochromator Graphit, Einkristall 0.45 x 0.95 x 0.15 $mm^{-3}$, Datensammlung Wyckhoff-scan, θ Bereich 1.75 - 27.5°, 18 634 gemessene Reflexe und 4 304 als beobachtet eingestuft (I ≦ 3 δ (F)), linearer Absorptionskoeffizient 0.06 $mm^{-1}$, abs. Korrektur ω-Scan, Structural analyse und Verfeinerung: Lösung durch die direkte Phasenbestimmung, Verfeinerungsmethode: volle Matrix isotrope LSQ, Parameter/$F_o$ Verhältnis 0.089, R = 0.262, verwendetes Programm Nicolet SHELXTL PLUS.

**N,N′-Di(1-nonyldecyl)perylen-3,4:9,10-bis(dicarboximid)**

5.7 g (18.0 mmol) 10-Nonadecylamin, Reaktionszeit 2 h, Reinigung durch Säulenchromatographie mit Chloroform und Kieselgel, eine zweite Chromatographie mit n-Pentan und Kielselgel und Trieftemperaturkristallisaion aus n-Pentan bei -30°C. Ausb. 4.7 g (68%), rotes Pulver - Schmp. 97°C, $R_f$ (Kieselgel/$CHCl_3$) = 0.88. - IR (KBr): ν = 2955 $cm^{-1}$m, 2925s, 2854s, 1697s, 1653s, 1617w, 1595s, 1579m, 1507w, 1467m, 1457m, 1436m, 1406m, 1377w, 1353m, 1340s, 1255m, 1211w, 1174w, 1125w, 1112w, 958w, 852w, 811m, 795w, 747m, 721w. - UV ($CHCl_3$): $\lambda_{max}$ (ε) = 457.5 nm (19910), 488.5 (52720), 5245 (87080); (n-Heptan): $\lambda_{max}$ (ε) ) 448 nm (21210), 478 (55060), 514 (93830) - Fluoreszenz ($CHCl_3$): $\lambda_{max}$ = 532.5 nm, 574.5; (n-Heptan): $\lambda_{max}$ = 519.5 nm, 558.5. -Feststoff Fluoreszenz: $\lambda_{max}$ = 612 nm. - $^1$H-NMR ($CDCl_3$/TMS): δ = 0.9 (m, 12 H), 1.3 (m, 56 H), 2.1 (m, 8 H), 5.2 (m, 2H), 8.7 (m, 8H). - $^{13}$C-NMR ($CDCl_3$): δ = 14.1, 22.7, 27.0, 29.3, 29.6, 30.3, 31.9, 32.4, 54.8, 75.2, 75.4, 122.1, 123.6, 124.0, 126.4, 129.6, 131.3, 184.4, 164.1. 164.2. - MS (70 eV) : m/z (%) = 925 (13.8), 924 (41), 923 (59) ($M^+$), 657 (29), 656 (22), 391 (46), 390 (51), 266 (38), 125 (27), 111 (52), 98 (27), (93), 85 (27), 84 (39), 83 (100), 82 (27), 71 (56), 69 (87), 67 (29), 57 (80), 56 (53), 55 (94), 54 (24), 43 (72). - Löslichkeit (n-Heptan) : 35 g /100 ml.

| | | | | |
|---|---|---|---|---|
| $C_{62}H_{86}N_2O_4$ (922.7) | Ber. | C 80.65 | H 9.39 | N 3.03 |
| | Gef. | C 80.51 | H 9.61 | N 3.15 |

**N,N′-Di(1-decylundecyl)perylen-3,4:9,10-bis(dicarboximid)**

1.7 g (4.4 mmol) 11-Heneicosylamin, Reaktionszeit 1 h, Reinigung durch Säulenchromatographie mit Chloroform und Kieselgel, eine zweite Chromatographie mit Petrolether 30/50 und Kieselgel und Tieftemperaturkristallisation aus n-Pentan bei -30°C. Ausb. 1.35 g (31%), rotes Pulver - Schmp. 95°C, $R_f$ (Kieselgel/$CHCl_3$) = 0.90. - IR (KBr): ν = 2025 $cm^{-1}$s, 2854s, 1734w, 1697w, 1697s, 1651s, 1616w, 1595s, 1579m, 1506w, 1465m,

1457m, 1406m, 1340s, 1252m, 1211w, 1175w, 813m, 747m. - UV ($CHCl_3$): $\lambda_{max}$ (ε) =468 nm (18350), 489 (50780), 525 (84890); (n-Heptan): $\lambda_{max}$(ε) = 449 nm (19950), 479 (53750), 515 (91740). - Fluoreszenz ($CHCl_3$): $\lambda_{max}$ = 532 nm, 572; (n-Heptan): $\lambda_{max}$ = 519 nm, 559. - Feststoff-Fluoreszenz: $\lambda_{max}$ = 6112 nm. - MS (70 eV): m/z (%) = 980 (42), 979 (59) ($M^+$), 686 (30), 391 (41), 390 (43), 294 (37), 111 (53), 97 (98), 85 (31), 84 (39), 83 (100), 82 (30), 71 (47), 70 (51), 69 (84), 67 (31), 57 (84), 55 (91), 43 (85), 41 (67). - Löslichkeit (n-Heptan): 4.8 g/100 ml.

| | | | | | |
|---|---|---|---|---|---|
| $C_{66}H_{94}N_2O_4$ | (978.8) | Ber. | C 80.93 | H 9.67 | N 2.86 |
| | | Gef. | C 81.06 | H 9.64 | N 2.84 |

**N,N′-Di(1-dodecyltridecyl)perylen-3,4:9,10-bis(dicarboximid)**

2.2 g (6.0 mmol) 13-Pentacosylamin, Reaktionszeit 2 h, Reinigung durch Säulenchromatographie mit Chloroform und Kieselgel, eine zweite Chromatographie mit Petrolether 30/50 und Kieselgel nd Tieftemperaturkristallisation aus n-Pentan bei 0°c.Ausb. 0.91 g (13%), oranges Pulver- Schmp. 74.5°C, $R_f$ (Kieselgel/$CHCL_3$) = 0.90. - IR (KBr): ν = 2924 $cm^{-1}$s, 2853, 1697s, 1653s, 1616w, 1595w, 1579m, 1507w, 1467m, 1436w, 1406m, 1340s, 1254m, 1211w, 1175w, 1125w, 812m, 748w, 722. - UV ($CHCl_3$): $\lambda_{max}$ ( ε) ) 458 nm (18830), 489 (50790), 525(84490); (n-Heptan): $\lambda_{max}$ (ε) = 449 nm (20270), 479 (53860), 515 (91770). -Fluoreszenz ($CHCl_3$): $\lambda_{max}$ = 532 nm, 572; (n-Heptan): $\lambda_{max}$ = 519 nm, 559. - Feststoff-Fluoreszenz (orange Modifikation): $\lambda_{max}$ = 582 nm, 615 (sh); (rote Modifikation): $\lambda_{max}$ = 623 nm - $^1$H-NMR ($CDCl_3$): δ = 0.9 (m, 12H), 1.3 (m, 80H), 2.1 (m, br., 8H), 5.2 (m, 2H); 8.7 (m, 8H). - $^{13}$C-NMR ($CDCl_3$): δ = 14.1, 22.6, 27.0, 29.3, 29.6, 30.1, 31.9, 32.4, 54.8, 122.8, 123.6, 126.3, 129.5, 131.3, 134.2, 163.3, 164.0. - MS (70 eV): m/z (%) = 1092 (19), 1091 (47), 1090 (56) ($M^+$), 743 (33), 742 (64), 741 (50), 393 (38), 392 (87), 391 (100). Löslichkeit (n-Heptan): 67 mg/100 ml.

| | | | | | |
|---|---|---|---|---|---|
| $C_{74}H_{110}N_2O_4$ | (1090.9) | Ber. | C 81.42 | H 10.16 | N 2.57 |
| | | Gef. | C 81.51 | H 10.09 | N 2.76 |

**N,N′-Di(1-hexadecylheptadecyl)perylen-3,4:9,10-bis(dicarboximid)**

8.6 g (18 mmol) 17-Tritriacontylamin, Reaktionzeit 2 h, Reinigung durch Säulenchromatographie mit Chloroform und Kieselgel, eine zweite Chromatographie mit n-Pentan und Kieselgel und Tieftemperaturkristallisation aus n-Pentan bei -30°C. Ausb. 1.5 g (17%), rotes Pulver - Schmp. 97°C, $R_f$ (Kieselgel/$CHCl_3$) = 0.96. -IR (KBr): ν = 2923 $cm^{-1}$s, 2853s, 1697m, 1653m, 1595m, 1577w, 1506w, 1467m, 1460w, 1437w, 1406m, 1340m, 1255m, 1211w, 1176w, 1129w, 968w, 860w, 812w, 800w, 747w, 725w. - UV ($CHCl_3$): $\lambda_{max}$ (ε) = 458 nm (19087), 489 (52514), 525.5 (87310), (n-Heptan) : $\lambda_{max}$ (ε) ) 449.5 nm (20045), 480 (54940), 515 (93970). - Fluoreszenz ($CHCl_3$): $\lambda_{max}$ = 574.5; (n-Heptan): $\lambda_{max}$) 518.5 nm, 558. -Feststoff-Fluoreszenz: $\lambda_{max}$ = 608 nm. - MS (70 eV): m/z (%) = 1317 (13), 1316 (72), 1315 (27) ($M^+$), 856 (38), 855 (38), 855 (38), 854 (67), 853 (42), 393 (12), 392 (48), 391 (96), 390 (100), 253 (15), 111 (11), 97 (20), 85 (11), 83 (20), 71 (14), 69 (15), 57 (24), 55 (15), 43 (16). - Löslichkeit (n-Heptan): 0.13 g/100 ml.

| | | | | | |
|---|---|---|---|---|---|
| $C_{90}H_{142}N_2O_4$ | (1316.1) | Ber. | C 82.13 | H 10.87 | N 2.13 |
| | | Gef. | C 82.13 | H 11.05 | N 2.27 |

**N,N′-Di(1-octadecylnonadecyl)perylen-3,4:9,10-bis-(dicarboximid)**

5.3 g (9.8 mmol) 19-Heptatriacontylamin, Reaktionzeit 1h, Reinigung durch Säulenchromatographie mit Chloroform und Kieselgel, eine zweite Chromatographie mit n-Pentan und Kieselgel und Tieftemperaturkristallisation aus n-Pentan bei 0°C. Ausb. 1.2 g (19%), rotes Pulver - Schmp. 84.5°C, $R_f$ (Kieselgel/$CHCl_3$) = 0.94 - IR (KBr): ν = 3421 $cm^{-1}$ m br. , 2961m, 2920s, 2851s, 1697m, 1649m, 1595m, 1578w, 1506w, 1468m, 1438w, 1406m, 1340m, 1256m, 1210w, 1177w, 1125w, 813m, 748m, 720s. - UV ($CHCl_3$): $\lambda_{max}$ ( ε) ) 458 nm (18180), 489 (50320), 525 (84400); (n-Heptan): $\lambda_{max}$ (ε) = 449 nm (19160), 479 (52370), 515 (89350). - Fluoreszenz ($CHCl_3$): $\lambda_{max}$ = 532 nm, 572; (n-Heptan): $\lambda_{max}$ = 519 nm, 560. - Feststoff-Fluoreszenz: $\lambda_{max}$ = 621 nm. - MS (70 eV): m/z (%) = 1429 (3), 1428 (7) ($M^+$), 1427 (6), 911 (3), 910 (3), 909 (3), 392 (8), 391 (12), 390 (8), 289

(7), 281 (9), 106 (40), 57 (47), 44 (100). - Löslichkeit (n-Heptan): 26 mg/100 ml.

| | | | | | |
|---|---|---|---|---|---|
| $C_{98}H_{158}N_2O_4$ | (1428.3) | Ber. | C 82.41 | H 11.15 | N 2.23 |
| | | Gef. | C 82.53 | H 11.19 | N 2.23 |

## Patentansprüche

1. Verwendung von schmelzbaren Farbstoffen der allgemeinen Formel I

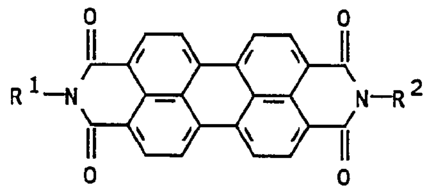

(I)

worin $R^1$ und $R^2$ unabhängig voneinander Nonyl, Tetradecyl, Hexadecyl, 1-Propylbutyl, 1-Butylpentyl, 1-Pentylhexyl, 1-Hexylheptyl, 1-Heptyloctyl, 1-Octylnonyl, 1-Nonyldecyl, 1-Decylundecyl, 1-Dodecyltridecyl, 1-Hexadecylheptadecyl, 1-Octadecylnonadecyl, 1-Ethylpentyl oder 1-Ethylhexyl bedeuten, in geschmolzener Form zur Herstellung von dokumentenechten Druck- und Kopiererzeugnissen, wobei $R^1$ und $R^2$ nicht gleichzeitig 1-Propylbutyl, 1-Butylpentyl, 1-Pentylhexyl oder 1-Hexylheptyl bedeuten können.

2. Verwendung gemäß Anspruch 1, dadurch gekennzeichnet, daß die Farbstoffe der allgemeinen Formel I als Toner oder als Zusatz zu Tonern in der Elektrophotographie, bevorzugt für Laserdrucker und Xeroxkopierer, verwendet werden.

3. Verwendung gemäß Anspruch 1, dadurch gekennzeichnet, daß die Farbstoffe der allgemeinen Formel I in Lösung, in Malkreiden oder Markierungsstiften verwendet und zu einer nachträglichen dauerhaften Fixierung einer Hitzebehandlung bei Temperaturen je nach Farbstoff zwischen 50 und 400°C unterworfen werden.

## Claims

1. Use of fusible dyes of the general formula I

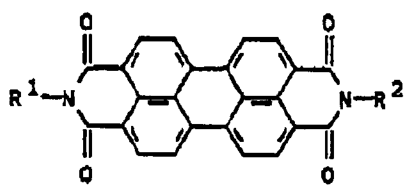

(I)

wherein $R^1$ and $R^2$ independently of one another are nonyl, tetradecyl, hexadecyl, 1-propylbutyl, 1-butylpentyl, 1-pentylhexyl, 1-hexylheptyl, 1-heptyloctyl, 1-octylnonyl, 1-nonyldecyl, 1-decylundecyl, 1-dodecyltridecyl, 1-hexadecylheptadecyl, 1-octadecylnonadecyl, 1-ethylpentyl or 1-ethylhexyl, in molten form for the preparation of document-fast printing and copying products, wherein $R^1$ and $R^2$ cannot simultaneously be 1-propylbutyl, 1-butylpentyl, 1-pentylhexyl or 1-hexylheptyl.

2. Use according to Claim 1, characterized in that the dyes of the general formula I are used as toners or as an additive to toners in electrophotography, preferably for laser printers and xerox copiers.

3. Use according to Claim 1, characterized in that the dyes of the general formula I are used in solution, in

drawing chalks or in marking pens and, for subsequent permanent fixing, are subjected to a heat treatment at temperatures of between 50 and 400°C, depending on the dye.

## Revendications

1. Utilisation de colorants fusibles de formule générale I

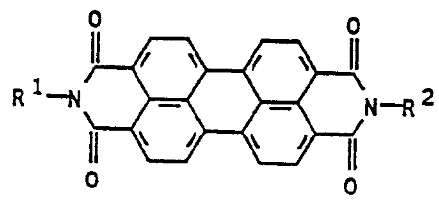

(I)

dans laquelle $R^1$ et $R^2$, indépendamment l'un de l'autre, signifient un nonyle, un tétradécyle, un hexadécyle, un 1-propylbutyle, un 1-butylpentyle, un 1-pentylhexyle, un 1-hexylheptyle, un 1-heptyloctyle, un 1-octylnonyle, un 1-nonyldécyle, un 1-décylundécyle, un 1-dodécyltridécyle, un 1-hexadécylheptadécyle, un 1-octadécylnonadécyle, un 1-éthylpentyle ou un 1-éthylhexyle, sous une forme fondue en vue de la préparation de produits imprimés ou reproduits indélébiles, $R^1$ et $R^2$ ne pouvant signifier dans le même temps un 1-propylbutyle, un 1-butylpentyle, un 1-pentylhexyle ou un 1-hexylheptyle.

2. Utilisation selon la revendication 1, **caractérisée** en ce que les colorants de formule générale I sont utilisés en tant que toner ou comme additif de toner en électrophotographie, de préférence pour des imprimantes laser et des xérocopieurs.

3. Utilisation selon la revendication 1, **caractérisée** en ce que les colorants de formule générale I sont utilisés en solution, dans des crayons de couleur ou dans des crayons marqueurs et sont soumis à un traitement à chaud à des températures comprises, selon le colorant, entre 50 et 400°C, en vue d'une fixation ultérieure, durable.